# EUROPÄISCHE PATENTSCHRIFT

(11) **EP 1 287 263 B1**
(45) Veröffentlichungstag und Bekanntmachung des Hinweises auf die Patenterteilung: **09.11.2005**
(21) Anmeldenummer: 01944929.7
(22) Anmeldetag: 16.05.2001
(51) Int. Cl.: F16B 37/08

(54) **MUTTER**
NUT
ECROU

(30) Priorität: 16.05.2000 DE 10023675
(43) Veröffentlichungstag der Anmeldung: 05.03.2003
(73) Patentinhaber: Giehl, Arno, 50996 Köln (DE)
(72) Erfinder: Giehl, Arno, 50996 Köln (DE)
(74) Vertreter: Bungartz, Klaus Peter
(86) Internationale Anmeldenummer: PCT/DE2001/001838
(87) Internationale Veröffentlichungsnummer: WO 2001/088390

(56) Entgegenhaltungen:
- US-A- 3 312 264
- US-A- 4 378 187
- US-A- 5 340 252
- US-A- 5 826 847

## Beschreibung

Die Erfindung betrifft eine Mutter, mit:
- einem Außenkörper, der eine axiale Durchgangsöffnung aufweist;
- einem Innenkörper, der in der Durchgangsöffnung in axialer Richtung verschiebbar aufgenommen ist, ein axiales Innengewinde aufweist und in axialer Richtung in wenigstens zwei Backen geteilt ist, die jeweils an ihrer radial inneren Fläche ein Innengewindesegment tragen und, wenn der Außenkörper relativ zum Innenkörper in Löserichtung der Mutter verschoben wird, auseinander gerückt werden;
- ersten Führungsmitteln, die an dem Außenkörper vorgesehen sind; und
- zweiten Führungsmitteln, die an den Backen vorgesehen sind und derart mit den ersten Führungsmitteln zusammenwirken, dass die Backen, wenn der Außenkörper relativ zum Innenkörper in Anziehrichtung der Mutter verschoben wird, geschlossen werden.

Eine derartige Mutter ist aus der DE 40 24 784 A1 bekannt. Sie wird dort als "Schnellmontagemutter" bezeichnet. Bei dieser bekannten Mutter ist die axiale Durchgangsöffnung des Außenkörpers, der dort als "Außenglied" bezeichnet wird, eine Sechskant-Innenbohrung mit einem vordersten Bereich, der in axialer Richtung konstante Innenabmessungen aufweist, sowie einem anschließenden konischen Bereich, der sich in Löserichtung der Mutter der Achse annähert.

Die Backen dieser bekannten Mutter, die dort als "Innenmuttersegmente" bezeichnet werden, haben jeweils einen Vorderabschnitt, der das jeweilige Innengewindesegment trägt, und einen daran einstückig anschließenden rückwärtigen Abschnitt. Dieser rückwärtige Abschnitt ist ähnlich wie der Vorderabschnitt geformt, ist jedoch relativ zu diesem leicht nach außen abgewinkelt und weist anstelle des Innengewindesegments eine gewindelose Ausnehmung auf, deren Innenabmessungen größer als das Innengewindesegment ist.

Die Backen sind an der Übergangsstelle zwischen den Vorderabschnitten und den rückwärtigen Abschnitten schwenkbar aneinander gelagert. Wenn nun der Außenkörper relativ zu dem Innenkörper nach vorne, also in Anziehrichtung der Mutter geschoben wird, dann werden die Backen zueinander derart geschwenkt, dass die Vorderabschnitte zugeklappt, das heißt geschlossen werden, so dass die Innenmuttersegmente in den Vorderabschnitten das Innengewinde der Mutter bilden. In diesem geschlossenen Zustand der Mutter sitzt der Außenkörper auf den Vorderabschnitten, während die rückwärtigen Abschnitte aufgeklappt sind.

Wenn hingegen der Außenkörper relativ zu dem Innenkörper nach hinten, das heißt in Löserichtung der Mutter, auf die aufgeklappten rückwärtigen Abschnitte geschoben wird, dann werden die Backen zueinander derart geschwenkt, dass die rückwärtigen Abschnitte zugeklappt werden, so dass die Vorderabschnitte, die ja einstückig mit den rückwärtigen Abschnitten verbunden sind, mitgenommen und aufgeklappt werden. In diesem aufgeklappten Zustand der Mutter ist somit das Innengewinde aufgeweitet, da die Innengewindesegmente aufgeklappt sind, so dass diese nicht mehr in Eingriff mit einer Gewindestange stehen, die durch die Mutter geführt ist. Außerdem bilden nun die Ausnehmungen in den rückwärtigen Abschnitten einen Hohlraum, durch den eine solche Gewindestange geschoben werden kann.

Eine ähnliche Mutter ist aus der FR 2 640 336 A1 bekannt. Auch bei dieser Mutter sind die Backen schwenkbar aneinander gelagert, jedoch tragen bei dieser Mutter die rückwärtigen Abschnitte die Innengewindesegmente, während die Vorderabschnitte die gewindelose Ausnehmung aufweisen. Daher wird diese Mutter geschlossen, wenn der Außenkörper relativ zu dem Innenkörper in Löserichtung verschoben wird, und geöffnet, wenn der Außenkörper relativ zu dem Innenköroper in Anziehrichtung geschoben wird.

Sowohl die bekannte Mutter gemäß DE 40 24 784 A1 als auch die bekannte Mutter gemäß FR 2 640 336 A1 haben zum einen den Nachteil, dass der Innenkörper deutlich länger als das Innengewinde ist, da sich an die Abschnitte, die die Innengewindesegmente tragen, jeweils einstückig noch die Abschnitte mit der gewindefreien Ausnehmung anschließen. Diese letztgenannten Abschnitte mit der gewindefreien Ausnehmung können jedoch nicht weggelassen werden, da sie zum Aufklappen der Abschnitte mit Innengewindesegment benötigt werden. Die bekannten Muttern sind daher zwangsläufig länger als ihr Innengewinde.

Die bekannten Muttern haben zum anderen den Nachteil, dass es verhältnismäßig schwierig ist, die Backen auf und zu zu klappen, wenn die Schraube auf einer Gewindestange sitzt. Dies liegt daran, dass jedes Innengewindesegment relativ zu dem Außengewinde der Gewindestange bei der Klappbewegung um eine Achse gedreht wird, die rechtwinklig zu der Längsachse liegt, so dass die Gewindegänge leicht aneinander verhaken.

Ferner ist aus der US 5,340,252 eine Mutter bekannt, die einen Innenkörper aufweist, der in wenigstens zwei Backen geteilt ist, die bei Verschieben des Außenkörpers relativ zum Innenkörper in Löserichtung der Mutter zusammengedrückt werden Ist diese Mutter fest angezogen und wird der Außenkörper relativ zum Innenkörper in Löserichtung bewegt, so ziehen sich die Backen aufgrund der Ausrichtung der konischen Innenfläche des Außenkörpers zusammen. Hier verdrängt ein Gewindebolzen beim Einführen in den Außenkörper die Backen gegen die Kraft einer axial angeordneten Feder, der Außenkörper wird dabei relativ zum Innenkörper in Anziehrichtung bewegt, die Backen gehen dabei auseinander, um einen für das Einschieben des Gewindebolzens ausreichenden Querschnitt freizugeben.

Der Innenkörper gleitet dann so lange über den Gewindebolzen, bis der Außenkörper an einer Anlagefläche anliegt. Dreht man nun die Mutter gemäß der D1, wird durch die axiale Feder gewährleistet, dass die Backen an dem Gewindebolzen anliegen, die Gewindegänge in Eingriff kommen und die Mutter festgezogen werden kann, wobei sich die Backen axial in Anziehrichtung und radial einwärts bewegen.

Bei dieser Mutter können die Backen nur auseinander bewegt werden, wenn der Außenkörper in Anziehrichtung der Mutter abgezogen wurde. Es ist zum Lösen also immer eine Drehung der Mutter erforderlich, was insbesondere dann problematisch ist, wenn zum Beispiel durch Korrosion die Backen festsitzen. Eine ähnliche Mutter ist aus der US 4,387,187 bekannt. Auch hier muss zunächst die Mutter verdreht werden, um den Außenkörper in Anziehrichtung abziehen zu können.

Es ist daher Aufgabe der Erfindung, eine Mutter der zu Beginn genannten Art zu schaffen, die bei gleicher Länge des Innengewindes kürzer ist und die sich leichter öffnen und schließen lässt.

Diese Aufgabe wird dadurch gelöst, dass die Backen bei Verschieben des Außenkörpers relativ zum Innenkörper in Löserichtung der Mutter auseinander gerückt werden und die zusammengesetzten Backen zumindest einen ersten zur Längsachse parallelen Abschnitt und zumindest einen zweiten sich in Anziehrichtung der Mutter von der Längsachse entfernenden Abschnitt aufweisen.

Eine solche Ausgestaltung der Erfindung ermöglicht es zum einen, die Mutter schnell von einem Gewindeschaft abziehen zu können, ohne diese um ihre Längsachse drehen zu müssen. Ein Verschieben des Außenkörpers relativ zum Innenkörper verschiebt hierzu die Backen radial auswärts. Zum anderen werden über die parallelen Abschnitte ausschließlich radial auswärts gerichtete Kräfte über die Bakken auf den Außenkörper übertragen, so dass keine Axialkraft auf den Außenkörper wirkt, die in Löserichtung der Mutter wirken würde.

Gemäß einer spezielleren Ausgestaltung der Erfindung wird die Aufgabe ferner dadurch gelöst, dass die Backen, wenn der Außenkörper relativ zum Innenkörper in Löserichtung verschoben wird, radial auswärts verschoben werden und, wenn der Außenkörper relativ zum Innenkörper in Anziehrichtung verschoben wird, radial einwärts verschoben werden.

Da bei dieser Mutter die Backen beim Öffnen und Schließen in radialer Richtung bewegt werden, können deren Innengewindesegmente leichtgängig in Eingriff mit dem Außengewinde einer Gewindestange gebracht und ebenso leicht wieder von diesem gelöst werden. Da die Backen zudem keine Abschnitte erfordern, die eine gewindefreie Ausnehmung aufweisen, muss ihre Länge nur der gewünschten Länge des Innengewindes entsprechen. Diese Mutter ist daher im geschlossenen Zustand nicht längere als eine herkömmliche einstückige Mutter.

Weitere Merkmale und Ausbildungen der Erfindung sind in den Unteransprüchen beschrieben.

So kann vorgesehen sein, dass die zweiten Führungsmittel Nuten umfassen, die in den Seitenflächen der Backen verlaufen und sich in Anziehrichtung von der Achse entfernen, und dass die ersten Führungsmittel Nasen umfassen, die von der Durchgangsöffnung vorspringen und in den Nuten laufen.

Da sich die Nuten in Anziehrichtung von der Achse entfernen, werden die Backen radial einwärts verschoben, wenn der Außenkörper in Anziehrichtung auf den Innenkörper aufgeschoben wird, und radial auswärts verschoben, wenn der Außenkörper in Löserichtung von dem Innenkörper abgezogen wird.

Weiter kann vorgesehen sein, dass an jeder Backe eine äußere Keilfläche, die sich in Anziehrichtung von der Achse entfernt, und an der Durchgangsöffnung zu jeder Backe eine innere Keilfläche vorgesehen ist, die sich korrespondierend zu der zugeordneten äußeren Keilfläche in Anziehrichtung von der Achse entfernt.

Außerdem kann vorgesehen sein, dass die Backen radial auswärts vorgespannt sind.

Darüber hinaus kann vorgesehen sein, dass ein Sperrstift quer zur Achse verschiebbar durch den Außenkörper geführt ist und in seiner Sperrstellung mit seinem inneren Ende an einer Rastfläche, die an wenigstens einer Backe quer zur Achse in Anziehrichtung weisend vorgesehen ist, anliegt und in seiner Freigabestellung mit seinem inneren Ende an dieser Rastfläche vorbei und zusammen mit dem Außenkörper in Löserichtung bewegt werden kann.

Dann ist bevorzugt vorgesehen, dass das äußere Ende des Sperrstiftes in der Sperrstellung von der äußeren Umfangsfläche des Außenkörpers vorsteht und das innere Ende des Sperrstiftes und die Rastfläche so ausgebildet sind, dass der Sperrstift durch Eindrücken aus der Sperrstellung in die Freigabestellung gebracht werden kann.

Weiter ist dann bevorzugt vorgesehen, dass der Sperrstift in die Sperrstellung vorgespannt ist.

Im folgenden werden bevorzugte Ausführungsbeispiele anhand der beigefügten Zeichnungen näher beschrieben.
- FIG. 1: ist eine geschnittene Seitenansicht einer Mutter in einer ersten Ausführungsform, bei der die Backen geöffnet sind;
- FIG. 2: ist ein Querschnitt entlang der Linie II-II aus der FIG. 1;
- FIG. 3: zeigt die Mutter der FIG. 1, bei der die Backen geschlossen sind;
- FIG. 4: ist ein Querschnitt entlang der Linie IV-IV aus der FIG. 3;
- FIG. 5: ist eine Seitenansicht einer Backe in einer ersten Ausführungsform für die Mutter der FIG. 1 bis 4;
- FIG. 6: ist eine Seitenansicht von zwei Backen in einer zweiten Ausführungsform;
- FIG. 7: ist die Vorderansicht zu der FIG. 6;
- FIG. 8: ist ein Querschnitt einer Mutter mit Backen in einer dritten Ausführungsform;
- FIG. 9: ist eine geschnittene Seitenansicht einer Mutter in einer zweiten Ausführungsform, bei der die Backen geöffnet sind;
- FIG. 10: zeigt die Mutter der FIG. 9, bei der die Backen geschlossen sind;
- FIG. 11: ist eine geschnittene Seitenansicht einer Mutter in einer dritten Ausführungsform, bei der die Backen geöffnet sind;
- FIG. 12: zeigt die Mutter der FIG. 11, bei der die Backen geschlossen sind;
- FIG. 13: ist eine geschnittene Seitenansicht einer Mutter in einer vierten Ausführungsform;
- FIG. 14: ist ein Querschnitt einer Mutter in einer fünften Ausführungsform;
- FIG. 15: ist ein Querschnitt einer Mutter mit einer Sperrvorrichtung in einer ersten Ausführungsform;
- FIG. 16: ist eine geschnittene Draufsicht einer Mutter mit einer Sperrvorrichtung in einer zweiten Ausführungsform;
- Fig. 17: ist eine geschnittene Seitenansicht einer Mutter in einer sechsten Ausführungsform; und
- Fig. 18: ist eine geschnittene Seitenansicht einer Mutter in einer siebten Ausführungsform.

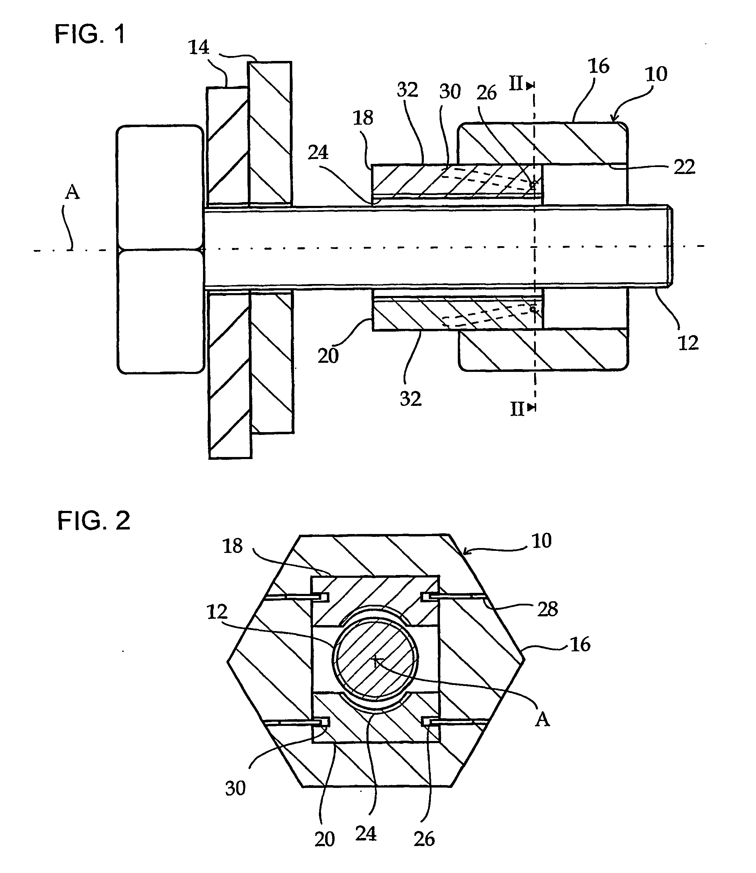

Die nachfolgenden Figuren weisen jeweils einzelne Merkmale auf, die isoliert als zur Erfindung gehörig betrachtet werden, ohne dass das jeweilig dargestellte Ausführungsbeispiel explizit alle erfindungswesentlichen Merkmale aufweist. Nachfolgend wird zunächst die allgemeine Funktionsweise der Erfindung anhand der Figuren 1 bis 5 dargestellt.

In den FIG. 1 bis 4 ist eine Mutter 10 in einer ersten Ausführungsform gezeigt. Gemäß den FIG. 1 und 2 befindet sich die Mutter 10 in einem geöffneten Zustand, so dass sie ohne Gewindeeingriff auf den Gewindeschaft 12 einer Schraube, der durch zwei zu verschraubende Gegenstände 14 geführt ist, in der FIG. 1 nach links, das heißt in ihre Anziehrichtung aufgeschoben und von diesem nach rechts, das heißt in ihre Löserichtung abgezogen werden kann.

Die Mutter 10 weist einen Außenkörper 16 und zwei Backen 18, 20 auf. Der Außenkörper 16 weist eine axiale Durchgangsöffnung 22 auf, in der die Backen 18, 20 in axialer Richtung verschiebbar aufgenommen sind, wie weiter unten näher erläutert wird. Die Durchgangsöffnung 22 weist hier einen rechteckigen Querschnitt auf und verläuft koaxial zur Längsachse A der Mutter 10. Die Backen 18, 20 sind hier quaderförmige Blöcke, deren Länge der Länge des Außenkörpers 16 entspricht und deren Breite geringfügig kleiner als die Breite der Durchgangsöffnung 22 ist, wie in der FIG. 2 gut zu erkennen ist, so dass sie drehfest in der Durchgangsöffnung 22 sitzen. Jede Backe 18, 20 weist an ihrer radial inneren Fläche, also an derjenigen Fläche, die zu dem Gewindeschaft 12 weist, ein Innengewindesegment 24 auf, das passend zu dem Außengewinde des Gewindeschafts 12 ausgebildet ist. Folglich trägt die in den FIG. 1 und 2 obere Backe 18 ihr Innengewindesegment 24 auf ihrer Unterseite, während die untere Backe 20 ihr Innengewindesegment 24 auf ihrer Oberseite trägt.

Wie in der FIG. 2 gut zu erkennen ist, sind die beiden Backen 18, 20 symmetrisch um die Längsachse A und somit auch um den Gewindeschaft 12 herum verteilt, das heißt sie liegen in einem Winkelabstand von 180° zueinander. Diese Anordnung gilt entsprechend auch für (nicht dargestellte) andere Ausführungsformen der Mutter 10, bei denen mehr als zwei Backen vorgesehen sind: Im Falle von drei Backen sind diese dann bevorzugt im Winkelabstand von 120° zueinander um die Längsachse A herum angeordnet.

Gemäß der FIG. 2 sind an dem Außenkörper 16 erste Führungsmittel vorgesehen, die hier vier Nasen 26 umfassen, die von der Durchgangsöffnung 22 vorspringen. Dabei sind jeweils zwei Nasen 26 an der in der FIG. 2 linken und an der rechten Seite der Durchgangsöffnung 22 in gleichem Abstand oberhalb und unterhalb der Längsachse A angeordnet. Die Nasen 26 werden hier durch das innere Ende von Stiften gebildet, die von außen in Durchgangslöcher 28 im Außenkörper 16 eingeschoben wurden.

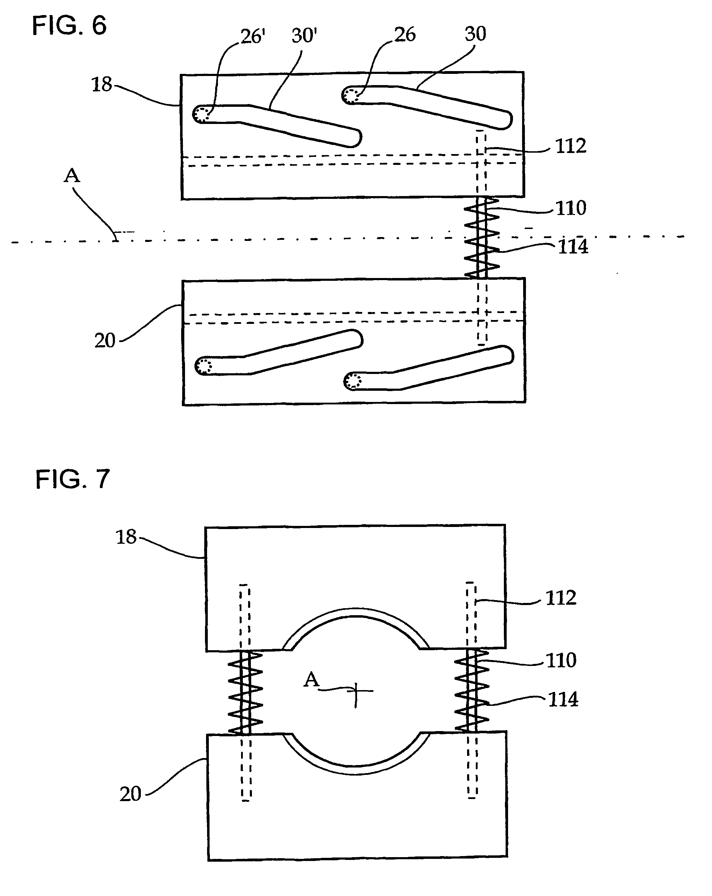

Passend zu diesen ersten Führungsmitteln an dem Außenkörper 16 sind gemäß den FIG. 1, 2 und 5 zweite Führungsmittel an den Backen 18, 20 vorgesehen, die hier vier Nuten 30 umfassen, in denen jeweils eine der Nasen 26 läuft. Jede Backe 18, 20 weist auf ihrer in der FIG. 2 linken Seitenfläche eine Nut 30 und in ihrer rechten Seitenfläche eine zu dieser symmetrische andere Nut 30 auf. Jede Nut 30 entfernt sich dabei gemäß den FIG. 1 und 5 in Anziehrichtung von der Längsachse A, so dass ihr Abstand zur Längsachse A in der FIG. 1 links größer ist als rechts. Somit verläuft jede Nut 30 im wesentlichen axial in einer Ebene, die parallel und in Abstand zur Längsachse A liegt.

Obwohl die Nuten hier gerade sind, können sie auch in axialer Richtung gekrümmt sein.

Im folgenden wird anhand der FIG. 1 bis 4 die Funktionsweise der Mutter 10 beschrieben. In den FIG. 1 und 2 ist die Mutter 10 im geöffneten Zustand gezeigt, in dem die Backen 18, 20 so weit auseinander gerückt sind, dass ihre Innengewindesegmente 24 nicht in Eingriff mit dem Außengewinde des Gewindeschafts 12 stehen. Die Mutter 10 kann daher in diesem geöffneten Zustand nach rechts in der FIG. 1, also in Löserichtung, schnell von dem Gewindeschaft 12 abgezogen werden, ohne dass sie um ihre Längsachse A gedreht werden muss, wie es bei einer herkömmlichen einstückigen Mutter der Fall ist. Die Mutter 10 kann natürlich auch nach links, das heißt in Anziehrichtung, schnell auf den Gewindeschaft 12 aufgeschoben werden, ohne gedreht werden zu müssen.

Wie in der FIG. 1 gut zu erkennen ist, ist der Außenkörper 16 relativ zu den Backen 18, 20 in Löserichtung bis zum Anschlag der Nasen 26 am rechten Ende der Nuten 30 verschoben, so dass die Backen 18, 20 nur bis ungefähr zur Hälfte in der Durchgangsöffnung 22 stecken. Da jede Nut 30 mit ihrem rechten Ende näher zu der Längsachse A liegt als mit ihrem übrigen Verlauf, sind die Backen 18, 20 so weit auseinander gerückt, dass ihre Innengewindesegmente 24 nicht in Eingriff mit dem Gewindeschaft 12 stehen.

Da die Höhe der Backen 18, 20 so gewählt ist, dass sie mit ihrer radial äußeren Fläche 32, die bei der oberen Backe 18 deren Oberseite und bei der unteren Backe 20 deren Unterseite ist, in diesem geöffneten Zustand der Mutter 10 an der oberen bzw. unteren Fläche der Durchgangsöffnung 22 anliegen, wird verhindert, dass sie um die Nasen 30 nach unten kippen und dass dann die linke untere Kante der oberen Backe 18 und die rechte obere Kante der unteren Backe 20 am Gewindeschaft 12 anliegen.

Zum Schließen der Mutter 10 wird diese aus der in der FIG. 1 gezeigten Position so weit nach links geschoben, bis die Backen 18, 20 mit ihren linken Stirnflächen an den zu verbindenden Gegenständen 14 anstoßen. Wenn der Außenkörper 16 weiter relativ zum Gewindeschaft 12 nach links geschoben wird, wird er nun auch relativ zu den Backen 18, 20 nach links verschoben und somit, da diese nicht mehr nach links ausweichen können, auf sie aufgeschoben. Da nun der Außenkörper 16 relativ zu den Backen 18, 20 in Anziehrichtung verschoben wird, laufen die Nasen 26 in den Nuten 30 ebenfalls in Anziehrichtung, so dass die Backen 28, 20 radial einwärts verschoben und somit geschlossen werden. Da die Backen 18, 20 radial einwärts, also zum Gewindeschaft 12 hin bewegt werden, geraten ihre Innengewindesegmente 24 über deren gesamte Länge gleichmäßig in Eingriff mit dem Außengewinde des Gewindeschafts 12. Dadurch wird ein Verhaken und Verklemmen der Innengewindesegmente 24 mit dem Außengewinde durch einen schrägen Sitz der Backen 18, 20 auf dem Gewindeschaft 12 verhindert. Andernfalls bestünde die Gefahr, dass die Mutter 10 nicht vollständig geschlossen werden kann oder, wenn dies mit übermäßiger Kraft doch erreicht werden sollte, die Gewindegänge des Gewindeschafts 12 und/oder der Backen 18, 20 beschädigt werden.

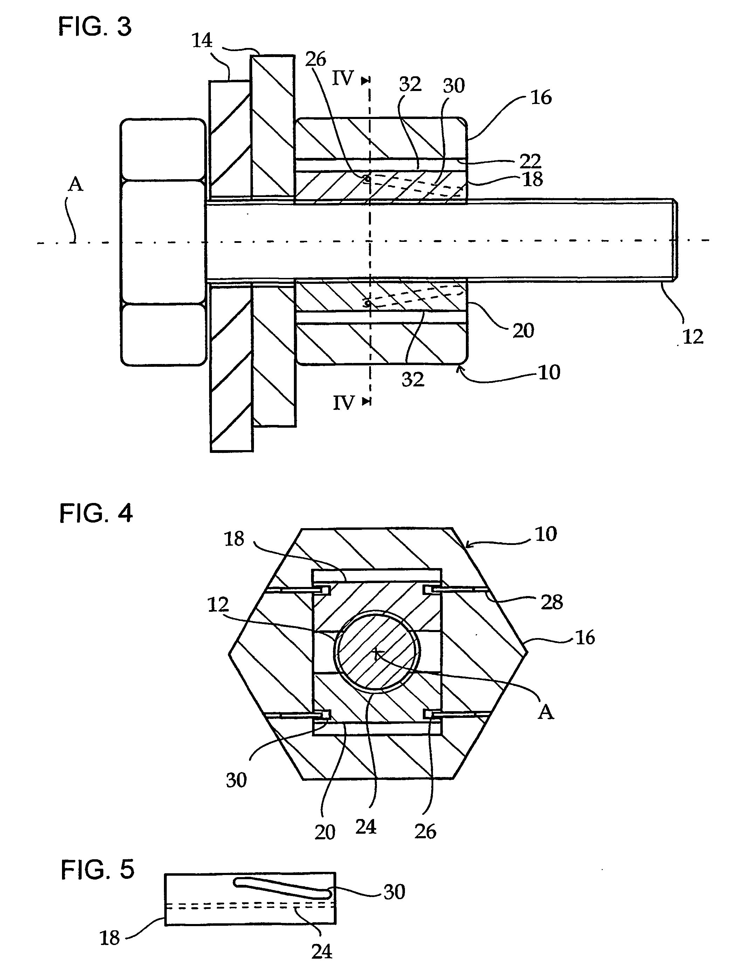

Wenn der Außenkörper 16 vollständig auf die Backen 18, 20 aufgeschoben ist, dann befindet sich die Mutter 10 im geschlossenen Zustand, der in den FIG. 3 und 4 dargestellt ist. In der FIG. 3 ist gut zu erkennen, dass dann die Nasen 26 im linken Ende der Nuten 30 sitzen, so dass die Innengewindesegmente 24 zusammen einen Teil eines Innengewindes bilden, das zu dem Außengewinde des Gewindeschafts 12 passt, wie in der FIG. 4 gut zu erkennen ist. Die Backen 18, 20 bilden also zusammen einen Innenkörper, der in der Durchgangsöffnung 22 drehfest und in axialer Richtung verschiebbar aufgenommen ist und ein axiales Innengewinde aufweist, wie es von einer Mutter 10 verlangt wird. Umgekehrt kann gesagt werden, dass der Innenkörper in axialer Richtung in zwei Backen 18, 20 geteilt ist.

Wenn die Mutter 10 in dem in den FIG. 3 und 4 dargestellten geschlossenen Zustand ist, dann kann sie wie eine herkömmliche einstückige Mutter angezogen werden, da der Innenkörper 18, 20 drehfest in der Durchgangsöffnung 22 sitzt.

Damit der Außenkörper 16 nicht unbeabsichtigt relativ zum Innenkörper in Löserichtung weg rutscht, was beispielsweise auftreten kann, wenn die Schraubverbindung aus Mutter 10 und Gewindeschaft 12 Vibrationen ausgesetzt ist, können die Nuten 30 an ihrem linken Ende einen Abschnitt aufweisen, der parallel zur Längsachse A verläuft und sich erst im Anschluss an diesen parallelen Abschnitt in Löserichtung, das heißt nach rechts der Längsachse A nähert. Dies ist besonders gut in der FIG. 5 zu erkennen. Um die Backen 18, 20 zu lösen, muss daher zunächst der Außenkörper 16 relativ zu diesen in Löserichtung so weit verschoben werden, bis die Nasen 26 am rechten Ende dieses parallelen Abschnitts der Nuten 30 angekommen ist. Erst wenn dann der Außenkörper 16 weiter in Löserichtung verschoben wird, laufen die Nasen 26 in den schrägen Nutabschnitten, so dass die Backen 18, 20 radial auswärts verschoben werden. Dadurch wird der Eingriff der Innengewindesegmente 24 mit dem Außengewinde des Gewindeschafts 12 immer weiter gelöst, bis der Außenkörper schließlich 16 relativ zum Innenkörper 18, 20 so weit in Löserichtung verschoben ist, dass die Nasen 26 am rechten Ende der Nuten 30 anschlagen. Die Mutter 10 hat dann wieder den geöffneten Zustand eingenommen, in dem die Backen 18, 20 nicht in Eingriff mit dem Gewindeschaft 12 stehen, so dass die Mutter 10 wieder schnell von dem Gewindeschaft 12 abgezogen werden kann.

In den FIG. 6 und 7 sind zwei Backen 18, 20 in einer zweiten Ausführungsform gezeigt. Hier ist links neben jeder Nut 30 eine zu dieser parallele zweite Nut 30' vorgesehen. Entsprechend weist der Außenkörper 16 der FIG. 1 bis 4 (nicht dargestellt) links neben jeder Nase 26 (als gepunktete Linie angedeutet) ebenfalls eine zweite Nase 26' (als gepunktete Linie angedeutet) auf, die in der zugeordneten zweiten Nut 30' läuft. Dadurch wird bewirkt, dass die Backen 18, 20 möglichst parallel zur Längsachse A gehalten werden.

Außerdem sind bei dieser zweiten Ausführungsform Mittel vorgesehen, die verhindern, dass die Backen 18, 20, relativ zueinander axial verschoben werden, wenn der Außenkörper auf sie aufgeschoben oder von ihnen abgezogen wird. Derartige Mittel sind auch für alle anderen Ausführungsformen der Backen geeignet. Diese Mittel umfassen hier beispielsweise zwei Führungsstangen 110, die am in der FIG. 6 rechten Ende der Backen 18, 20 in der FIG. 7 links und rechts neben der Längsachse A angeordnet sind und jeweils verschiebbar in zwei gegenüberliegenden Führungsbohrungen 112 in den Backen 18, 20 sitzen. Die Backen 18, 20 können daher zum Öffnen und Schließen wie gewünscht relativ zueinander radial, nicht aber axial verschoben werden. Die Mittel können auch weniger oder mehr als zwei Führungsstangen 110 umfassen.

Des weiteren werden die Backen 18, 20 durch zwei Schraubenfedern 114 radial auswärts vorgespannt, die jeweils eine Führungsstange 110 umgeben und sich an der Unterseite der oberen Backe 18 und an der Oberseite der unteren Backe 20 abstützen. Dadurch wird das Öffnen der Backen 18, 20 beim Abziehen des Außenkörpers 16 unterstützt.

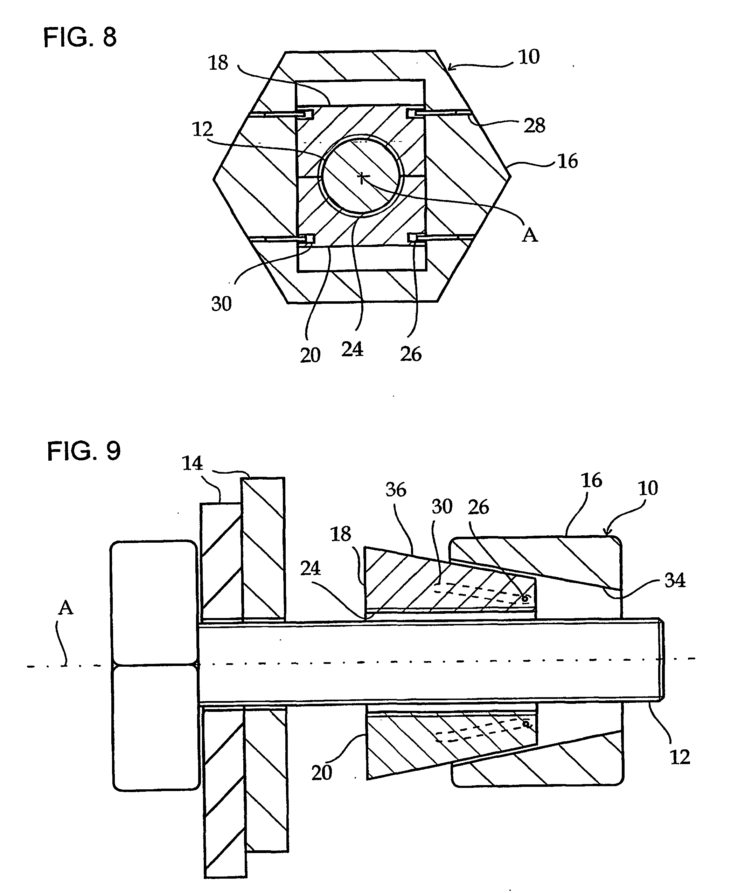

In Abweichung von der in den FIG. 1 bis 7 dargestellten Form der Backen 18, 20 können diese natürlich auch so geformt sein, dass sie im geschlossenen Zustand ein vollständiges Innengewinde bilden, wie es bei der dritten Ausführungsform der Backen 18, 20 gemäß der FIG. 8 gezeigt ist.

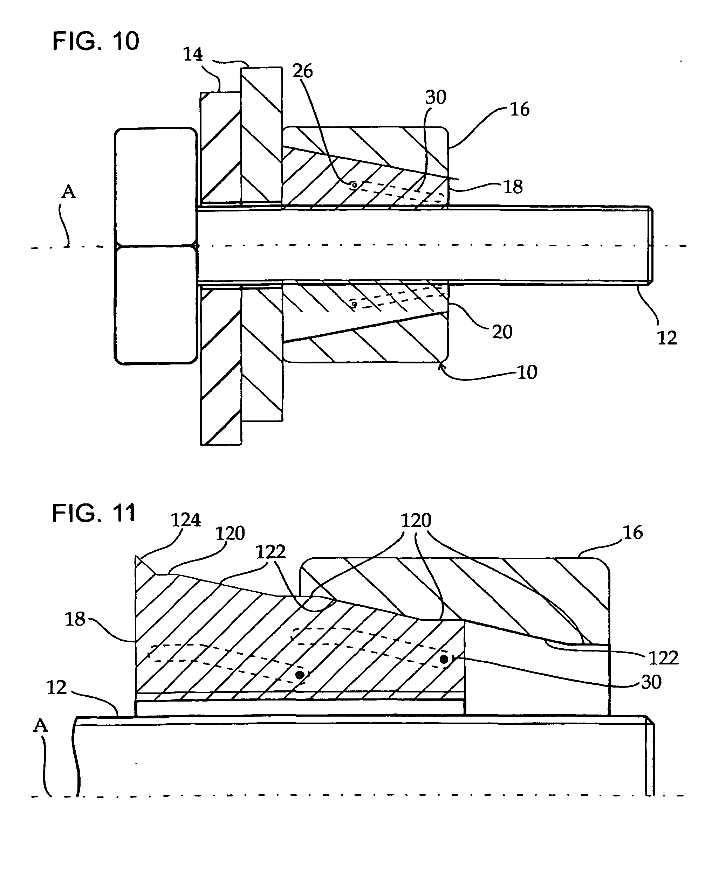

In den FIG. 9 und 10 ist die Mutter 10 in einer zweiten Ausführungsform gezeigt. Im Unterschied zu der ersten Ausführungsform der FIG. 1 bis 5 sind hier zusätzlich zu den ersten und zweiten Führungsmitteln 26, 30 korrespondierende Keilflächen 34, 36 vorgesehen.

Zum einen ist zu jeder Backe 18, 20 ist eine innere Keilfläche 34 vorgesehen, die von der Durchgangsöffnung 22 gebildet wird und sich in Anziehrichtung von der Längsachse A entfernt. Eine erste innere Keilfläche 34 ist an der nach unten, zur oberen Backe 18 weisenden Oberseite der Durchgangsöffnung 22 ausgebildet, und eine zweite innere Keilfläche 34 ist symmetrisch hierzu an der nach oben, zur unteren Backe 20 weisenden Unterseite der Durchgangsöffnung 22 ausgebildet.

Zum anderen ist an jeder Backe 18, 20 eine äußere Keilfläche 36 vorgesehen, die korrespondierend zu der jeweils gegenüber liegenden inneren Keilfläche 34 ausgebildet ist und sich somit in Anziehrichtung von der Längsachse A entfernt. Eine erste äußere Keilfläche 36 ist an der Oberseite der oberen Backe 18 ausgebildet, und eine zweite äußere Keilfläche 36 ist symmetrisch hierzu an der Unterseite der unteren Backe 20 ausgebildet.

Die korrespondierenden inneren und äußeren Keilflächen 34, 36 sind derart ausgebildet, dass sie in geschlossenem Zustand der Mutter 10 genau aufeinander passen, wie in der FIG. 9 gut zu erkennen ist, und ihre Schrägstellung relativ zur Längsachse A ist im Hinblick auf die Schrägstellung der Nuten 30 derart gewählt, dass sie beim Verschieben des Außenkörpers 16 relativ zum Innenkörper 18, 20 zum Öffnen und Schließen der Mutter 10 aneinander vorbei bewegt werden können. Im geschlossenen Zustand der Mutter 10 besteht daher ein Reibschluss zwischen den inneren und äußeren Keilflächen 34, 36, so dass der Außenkörper 16 auf dem Innenkörper 18, 20 gehalten wird.

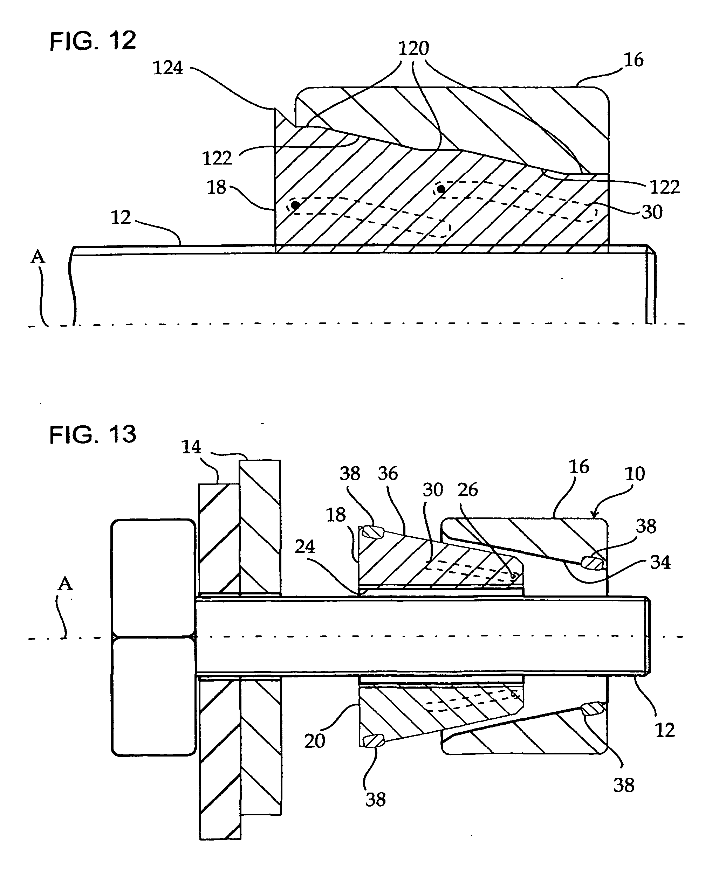

In den FIG. 11 und 12 ist die Mutter 10 in einer dritten Ausführungsform gezeigt, die eine Abwandlung der zweiten Ausführungsform der FIG. 9 und 10 darstellt. Hier sind die Keilflächen 34, 36 in fünf Abschnitte unterteilt, nämlich in drei zur Längsachse A parallele Abschnitte 120 und in zwei schräge Abschnitte 122, die sich in Anziehrichtung von der Längsachse A entfernen und zwischen den drei parallelen Abschnitten 120 liegen. Es können auch weniger oder mehr als drei parallele Abschnitte 120 und/oder weniger oder mehr als zwei schräge Abschnitte 122 vorgesehen sein. Die Nuten 30 verlaufen entsprechend parallel zu dem mittleren parallelen Abschnitt 120 und dem daran rechts anschließenden rechten schrägen Abschnitt 122.

Im geschlossenen Zustand der FIG. 12 liegt die äußere Keilfläche 36 mit ihren parallelen Abschnitten 120 an den entsprechenden parallelen Abschnitten 120 der inneren Keilfläche 34 an, während sie mit ihren schrägen Abschnitten 122 wahlweise an den entsprechenden schrägen Abschnitten 122 der inneren Keilfläche 34 anliegen kann, wie es in der FIG. 12 dargestellt ist, oder auch in Abstand zu diesen liegen kann. Die aneinander liegenden parallelen Abschnitte 120 nehmen die radial auswärts gerichteten Kräfte auf, die bei geschlossener Mutter 10 von dem Außengewinde des Gewindeschafts 12 über die Innengewindesegmente 24 auf die Backen 18, 20 übertragen werden. Da diese parallelen Abschnitte 120 rechtwinklig zu diesen radialen Kräften liegen, wird auf den Außenkörper 16 nur eine Radialkomponente übertragen, nicht jedoch eine in Löserichtung gerichtete Axialkomponente, wie es bei den schrägen Keilflächen 34, 36 der zweiten Ausführungsform der Fall ist. Diese Axialkomponente kann jedoch bei ausreichender Größe dazu führen, dass der Außenkörper 16 relativ zum Innenkörper 18, 20 weg rutscht, wodurch die Mutter 10 unbeabsichtigt gelöst wird. Dies wird folglich durch die parallelen Abschnitte 120 verhindert.

Obwohl die in den FIG. 9 bis 12 dargestellten Keilflächen 34, 36 hier eben sind, können sie auch nach Bedarf gekrümmt sein, und zwar in axialer Richtung und/oder in Umfangsrichtung.

Gemäß den FIG. 11 und 12 ist ein radial auswärts vorstehender Flansch 124 am linken Außenrand der Backen 18, 20 derart vorgesehen, dass bei geschlossener Mutter 10 zwischen seiner rechten Flanke und der linken Stirnflächen des Außenkörpers 16 ein Spalt gebildet wird. In diesen Spalt kann beispielsweise die Klinge eines Schraubendrehers gesetzt und gedreht werden, um die Mutter 10 aufzuhebeln, falls der Außenkörper 16 so fest auf dem Innenkörper 18, 20 sitzen sollte, dass er nicht mit den Fingern abgezogen werden kann.

Dieser Flansch 124 ist auch für alle anderen Ausführungsformen der Mutter 10 geeignet.

Das zuvor erwähnte unbeabsichtigte Verrutschen des Außenkörpers 16 relativ zum Innenkörper 18, 20 in Löserichtung kann auch durch die folgenden Maßnahmen verhindert oder zumindest erschwert werden, die in den FIG. 13 bis 16 dargestellt sind.

So kann beispielsweise gemäß der FIG. 13, in der die Mutter 10 der FIG. 9 und 10 in einer abgewandelten, vierten Ausführungsform gezeigt ist, am rechten Ende der inneren Keilfläche 34 und/oder am linken Ende der äußeren Keilfläche 36 ein Klemmkörper 38 angebracht sein, der von der entsprechenden Keilfläche 34, 36 vorspringt und aus einem verformbaren Material, wie zum Beispiel Gummi oder Silikon besteht. Wenn der Außenkörper 16 aus der in der FIG. 13 gezeigten Position relativ zu den Backen 18, 20 weiter nach links verschoben wird, wird das linke Ende der inneren Keilfläche 34 auf den linken Klemmkörper 38 und das rechte Ende der äußeren Keilfläche 36 unter den rechten Klemmkörper 38 gezwängt, so dass die Klemmkörper 38 verformt werden und die Reibung zwischen den inneren und äußeren Keilflächen 34, 36 erhöhen. Der linke Rand der inneren Keilfläche 34 und der rechte Rand der äußeren Keilfläche 36 sind dabei bevorzugt angefast, um diese Keilflächen 34, 38 leichter auf die Klemmkörper 38 schieben zu können.

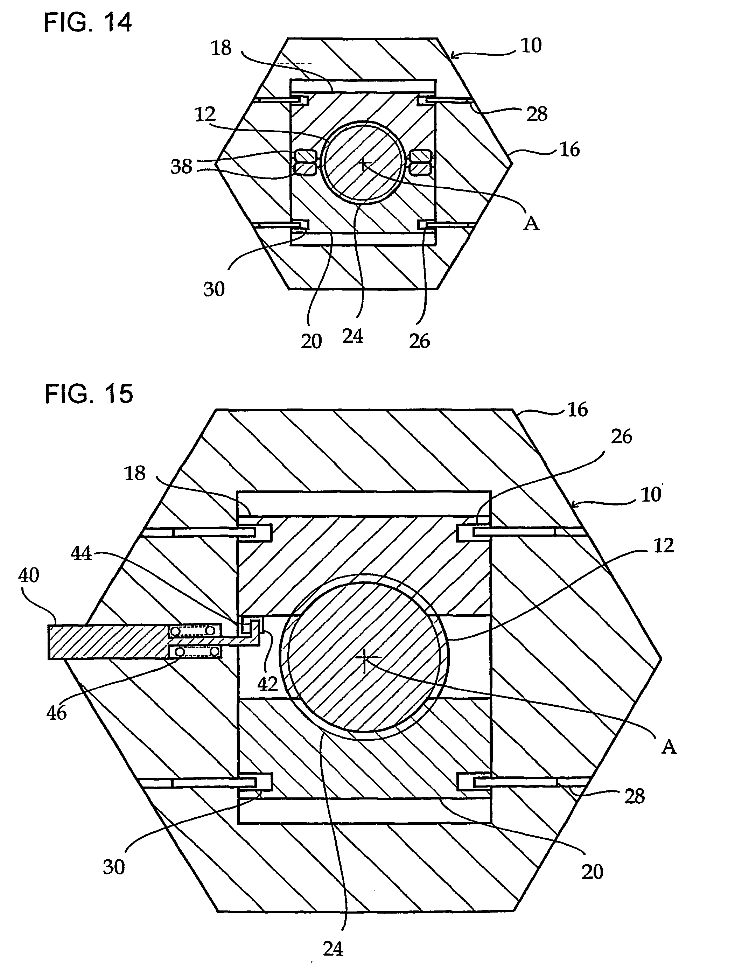

Gemäß der FIG. 14, in der die Mutter 10 in einer fünften Ausführungsform gezeigt ist, können auch Klemmkörper 38 an der oberen Backe 18 und/oder der unteren Backe 20 angebracht sein, die im geschlossenen Zustand der Mutter 10 zwischen diesen Backen 18, 20 eingeklemmt sind. Dadurch werden die Backen 18, 20 radial auswärts gedrückt, so dass im Falle der zweiten Ausführungsform der FIG. 9 und 10 und der dritten Ausführungsform der FIG. 11 und 12 die Reibung zwischen den inneren und äußeren Keilflächen 34, 36 und im Falle der ersten Ausführungsform der FIG. 1 bis 4 die Reibung zwischen den Nasen 26 und den radial äußeren Flächen der Nuten 30 erhöht wird.

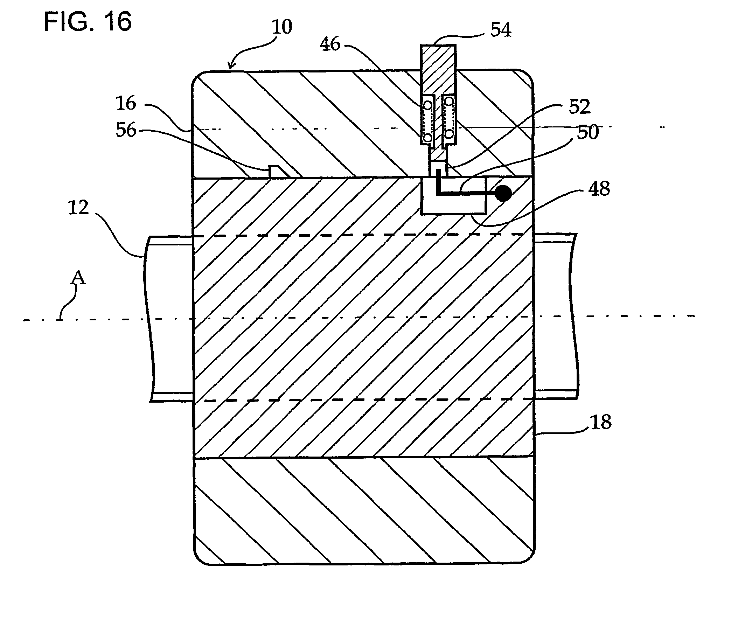

In den FIG. 15 und 16 ist die Mutter 10 der FIG.4 mit einer Sperrvorrichtung gezeigt, die verhindert, dass bei geschlossener Mutter 10 der Außenkörper 16 unbeabsichtigt relativ zu dem Innenkörper 18, 20 in Löserichtung bewegt werden kann.

Die Sperrvorrichtung in einer ersten Ausführungsform gemäß der FIG. 15 weist einen Sperrstift 40 auf, der quer zur Längsachse A verschiebbar in einer Durchgangsbohrung durch den Außenkörper 16 geführt ist und von der Durchgangsöffnung 22 nach innen mit seinem inneren Ende vorspringt. Außerdem ist an der oberen Backe 18 eine Rastfläche 42 vorgesehen, die quer zur Längsachse A in Anziehrichtung weist. Diese Rastfläche 42 ist hier Teil eines am linken Rand der Unterseite der oberen Backe 18 nach unten ragenden Vorsprungs, der oberhalb der Oberseite des Sperrstifts 40 endet. Das innere Ende des Sperrstifts 40 trägt einen nach oben abgewinkelten Fortsatz 44, der in der Sperrstellung des Sperrstifts 40 an der Rastfläche 42 anliegt. Wenn nun der Sperrstift 40 aus der in der FIG. 15 gezeigten Position radial einwärts in seine Freigabestellung gedrückt wird, wird auch der Fortsatz 44 radial einwärts bewegt, bis er in der FIG. 15 rechts neben der Rastfläche 42 liegt und somit innen an dieser vorbei und zusammen mit dem Außenkörper 16 in Löserichtung verschoben werden kann.

Der Sperrstift 40 wird durch eine Schraubenfeder 46 radial auswärts, das heißt in die Sperrstellung vorgespannt, die einen dünneren Mittelabschnitt des Sperrstifts 40 umgibt und zusammen mit dem Sperrstift 40 in der Durchgangsbohrung sitzt. Die Schraubenfeder 46 stützt sich mit ihrem radial inneren Ende an einer Schulter der in einer Durchgangsbohrung und mit ihrem radial äußeren Ende an einer Schulter des Sperrstifts 40 ab, wie in der FIG. 15 gut zu erkennen ist.

In der FIG. 16 ist die Sperrvorrichtung in einer zweiten Ausführungsform gezeigt. Bei dieser zweiten Ausführungsform weist die obere Backe 18 am rechten Ende ihrer in der FIG. 16 nach oben weisenden Seitenfläche eine Vertiefung 48 auf, die ein L-förmiges Federblech 50 aufnimmt. Der Axialschenkel dieses Federblechs 50 ist in der rechten Wand der Vertiefung 48 befestigt, und der nach außen gerichtete Radialschenkel des Federblechs 50 springt im entspannten Zustand des Federblechs 50 von der Seitenfläche der Backe 28 vor. In dem in der FIG. 16 dargestellten geschlossenen Zustand der Mutter 10 ragt das freie Ende dieses Radialschenkels bis in eine Durchgangsbohrung 52 in dem Außenkörper 16 hinein. Dadurch wird in dieser Sperrstellung verhindert, dass der Außenkörper 16 relativ zur Backe 18 in Löserichtung, das heißt nach rechts in der FIG. 16 bewegt werden kann. Denn dann gelangt der linke Rand der Durchgangsbohrung 52 in Berührung mit dem Radialschenkel und drückt diesen noch tiefer in die Durchgangsbohrung 52 hinein, wodurch der Axialschenkel radial aufwärts gebogen wird. Dieser linke Rand der Durchgangsbohrung 52 hat somit die gleiche Funktion wie die Rastfläche 42 der ersten Ausführungsform der Sperrvorrichtung.

Um das Federblech 50 in die Freigabestellung zu bringen, ist in der Durchgangsbohrung 52 ein Lösestift 54 angeordnet, der wie der Sperrstift 40 aus der FIG. 15 durch eine Schraubenfeder 46 radial nach außen vorgespannt wird und mit seinem äußeren Ende von dem Außenkörper 16 vorspringt. Wenn nun der Lösestift 54 radial einwärts gedrückt wird, dann schiebt sein inneres Ende den Radialschenkel des Federblechs 50 aus der Durchgangsbohrung 52 heraus, wobei der Axialschenkel federnd radial einwärts gebogen wird. Sobald der Radialschenkel nicht mehr in die Durchgangsbohrung 52 hinein ragt, kann der Außenkörper 16 in Löserichtung ver schoben werden.

In dem Außenkörper 16 ist weiter links neben der Durchgangsbohrung 52 ein Sackloch 56 vorgesehen, in den der Radialschenkel einrastet, wenn der Außenkörper 16 so weit in Löserichtung verschoben wurde, dass die Innengewindesegmente 24 nicht mehr in Eingriff mit dem Außengewinde des Gewindeschafts 12 stehen. Wenn die Mutter 10 in diesem geöffneten Zustand in Anziehrichtung auf den Gewindeschaft 12 geschoben wird, dann verhindert der in das Sackloch 56 eingerastete Radialschenkel, dass der Außenkörper 10 auf den Innenkörper 18, 20 aufgeschoben wird, wenn ein Innengewindesegment 24 unbeabsichtigt an dem Gewindeschaft 12 hängen bleiben sollte.

Wenn schließlich die Mutter 10 nicht mehr weiter in Anziehrichtung auf den Gewindeschaft 12 geschoben werden kann, weil der Innenkörper 18, 20 mit seiner linken Stirnfläche an die zu verschraubenden Gegenständen 14 (vgl. FIG. 3) stößt, dann wird der Radialschenkel aus dem Sackloch 56 gedrückt. Um dies zu erleichtern, ist gemäß der FIG. 16 die rechte Wand des Sacklochs 56 nach rechts unten schräggestellt.

Bei dieser zweiten Ausführungsform der Sperrvorrichtung kann der Lösestift 54 auch weggelassen werden. Um dann den in die Durchgangsbohrung 52 eingerasteten Radialschenkel in die Freigabestellung bringen zu können, kann dann, wie zuvor bei dem Sackloch 54 beschrieben, die linke Wand der Durchgangsbohrung 52 nach links unten schräggestellt sein (nicht dargestellt). Wenn nun der Außenkörper 16 mit ausreichender Kraft in Löserichtung gezogen wird, dann wird der an der schräggestellten Wand anliegende Radialschenkel radial einwärts umgelenkt, bis er nicht mehr in die Durchgangsbohrung 52 ragt und der Außenkörper 16 weiter ungehindert relativ zu dem Innenkörper 18, 20 abgezogen werden kann.

Jede Sperrvorrichtung der FIG. 15 und 16 ist nicht nur für Muttern 10 mit radial verschiebbaren Backen 18, 20, wie sie Gegenstand dieser Erfindung sind, geeignet, sondern auch für die bekannten Muttern mit schwenkbaren Backen, wie sie beispielsweise in der DE 40 24 784 A1 und FR 2 640 336 A1 beschrieben sind. Dies gilt auch für die Klemmkörper 38 der FIG. 13 und 14.

Sowohl der Sperrstift 40 in der FIG. 15 als auch der Lösestift 54 in der FIG. 16 stehen in ihrer Sperrstellung mit ihrem äußeren Ende von dem Außenkörper 16 vor, so dass sie der Nutzer mit einem Finger zum Lösen eindrücken kann. Um aber ein unbeabsichtigtes Eindrücken zu verhindern, können diese äußeren Enden in der Sperrstellung auch in der entsprechenden Durchgangsbohrung versenkt liegen. Zum Lösen ist dann ein Werkzeug, beispielsweise eine Zange, mit einen in die Durchgangsbohrung passenden Zahn erforderlich, mit dem der Sperrstift 40 beziehungsweise Lösestift 54 eingedrückt werden kann.

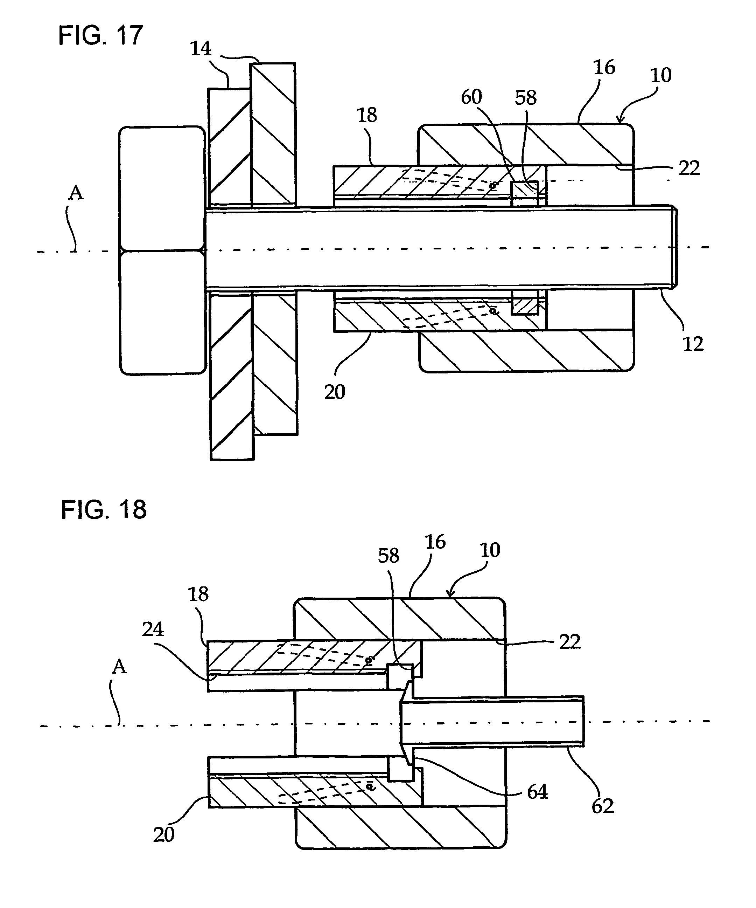

In der FIG. 17 ist die Mutter 10 in einer sechsten Ausführungsform gezeigt. Bei dieser Ausführungsform weisen die Backen 18, 20 an ihrem rechten Ende im Anschluss an ihr Innengewindesegment 24 eine gewindelose Ausnehmung 58 auf, in der ein gebogener Einsatz 60 aus verformbaren Material, wie beispielsweise Kunststoff sitzt. Beim Schließen der Backen 18, 20 drückt sich das Außengewinde des Gewindeschafts 12 in diese Einsätze 60, wodurch eine Selbstsicherung der Mutter 10 im geschlossenen Zustand gegen unbeabsichtigtes Losdrehen erzielt wird.

In der FIG. 18 ist die Mutter 10 in einer siebten Ausführungsform gezeigt. Diese Mutter 10 ist für den Einsatz an Bördelrohren 60 gedacht, die an ihren Enden einen Bördelrand 64 tragen. Bei dieser siebten Ausführungsform ist ähnlich wie bei der sechsten Ausführungsform am rechten Ende der Backen 18, 20 eine Ausnehmung 58 vorgesehen, in die im geschlossenen Zustand der Mutter 10 der Bördelrand 64 hinein passt. Im dargestellten geöffneten Zustand der Mutter 10 sind die Backen 10, 20 so weit auseinander gerückt, dass der Bördelrand 64 nach rechts in der FIG. 18 aus der Ausnehmung 58 herausgezogen werden kann. Dies ist beispielsweise dann erforderlich, wenn die auf dem Bördelrohr 62 sitzende Mutter 10 ausgetauscht werden muss.

### BEZUGSZEICHENLISTE

- 10: Mutter
- 12: Gewindeschaft
- 14: zu verschraubende Gegenstände
- 16: Außenkörper
- 18: obere Backe
- 20: untere Backe
- 22: Durchgangsöffnung
- 24: Innengewindesegment
- 26: Nasen
- 28: Durchgangslöcher
- 30: Nuten
- 32: radial äußere Flächen der Backen 18, 20
- 34: innere Keilflächen
- 36: äußere Keilflächen
- 38: Klemmkörper
- 40: Sperrstift
- 42: Rastfläche
- 44: Fortsatz
- 46: Schraubenfeder
- 48: Vertiefung
- 50: Federblech
- 52: Durchgangsbohrung
- 54: Lösestift
- 56: Sackloch
- 58: gewindelose Ausnehmung
- 60: Einsätze
- 62: Bördelrohr
- 64: Bördelrand
- 110: Führungsstangen
- 112: Führungsbohrungen
- 114: Schraubenfedern
- 120: parallele Abschnitte der Keilflächen 34, 36
- 122: schräge Abschnitte der Keilflächen 34, 36
- 124: Flansch
- A: Längsachse

## Patentansprüche

1. Mutter mit
• einem Außenkörper (16), der eine axiale Durchgangsöffnung (22) aufweist, einem Innenkörper, der in der Durchgangsöffnung (22) in axialer Richtung verschiebbar aufgenommen ist, ein Innengewinde aufweist und in axialer Richtung in wenigstens zwei Backen (18, 20) geteilt ist, die jeweils an ihrer radial inneren Fläche ein Innengewindesegment (24) tragen und
• mit ersten Führungsmitteln (26), die an dem Außenkörper (16) vorgesehen sind; und
• zweiten Führungsmitteln (30), die an den Backen (18, 20) vorgesehen sind und derart mit den ersten Führungsmitteln (26) zusammenwirken, dass die Backen (18, 20), wenn der Außenkörper (16) relativ zum Innenkörper in Anziehrichtung der Mutter (10) verschoben wird, geschlossen werden,
**dadurch gekennzeichnet, dass**
• die Backen (18, 20) bei Verschieben des Außenkörpers (16) relativ zum Innenkörper in Löserichtung der Mutter (10) auseinander gerückt werden und
• die zusammengesetzten Backen (18, 20) zumindest einen ersten zur Längsachse (A) parallelen Abschnitt (120) und zumindest einen zweiten sich in Anziehrichtung der Mutter (10) von der Längsachse (A) entfernenden Abschnitt (122) aufweisen.

2. Mutter (10) nach Anspruch 1, **dadurch gekennzeichnet, dass** der zweite Abschnitt (122) zumindest rechtwinklig zur Trennebene der Backen (18, 20) in Anziehrichtung der Mutter (10) einen mit konstanter Steigung erweiterten Querschnitt aufweist.

3. Mutter (10) nach Anspruch 1 oder 2, **dadurch gekennzeichnet, dass** in Anziehrichtung der Mutter (10) gesehen ein erster Abschnitt (120), dahinter ein zweiter Abschnitt (122), dahinter ein erster Abschnitt (120), hinter diesem wiederum ein zweiter Abschnitt (122) und dahinter wiederum ein zweiter Abschnitt (120) angeordnet ist.

4. Mutter (10) nach einem der Ansprüche 1 bis 3, **dadurch gekennzeichnet, dass** die zweiten Führungsmittel (30) derart mit den ersten Führungsmitteln (26) zusammenwirken, dass die Backen (18, 20), wenn der Außenkörper (16) relativ zum Innenkörper in Löserichtung verschoben wird, radial auswärts verschoben werden und, wenn der Außenkörper (16) relativ zum Innenkörper in Anziehrichtung verschoben wird, radial einwärts verschoben werden.

5. Mutter nach einem der vorhergehenden Ansprüche, **dadurch gekennzeichnet, dass** die zweiten Führungsmittel Nuten (30) umfassen, die in den Seitenflächen der Backen (18, 20) verlaufen und sich in Anziehrichtung von der Achse (A) entfernen, und dass die ersten Führungsmittel Nasen (26) umfassen, die von der Durchgangsöffnung (22) vorspringen und in den Nuten (30) laufen.

6. Mutter nach einem der vorhergehenden Ansprüche, **dadurch gekennzeichnet, dass** an jeder Backe (18, 20) eine äußere Keilfläche (36), die sich in Anziehrichtung von der Achse (A) entfernt, und an der Durchgangsöffnung (22) zu jeder Backe (18, 20) eine innere Keilfläche (34) vorgesehen ist, die sich korrespondierend zu der zugeordneten äußeren Keilfläche (36) in Anziehrichtung von der Achse (A) entfernt.

7. Mutter nach einem der vorhergehenden Ansprüche, **dadurch gekennzeichnet, dass** die Backen (18, 20) radial auswärts vorgespannt sind.

8. Mutter nach einem der vorhergehenden Ansprüche, **dadurch gekennzeichnet, dass** ein Sperrstift (40) quer zur Achse (A) verschiebbar durch den Außenkörper (16) geführt ist und in seiner Sperrstellung mit seinem inneren Ende an einer Rastfläche (42), die an wenigstens einer Backe (18) quer zur Achse (A) in Anziehrichtung weisend vorgesehen ist, anliegt und in seiner Freigabestellung mit seinem inneren Ende an dieser Rastfläche (42) vorbei und zusammen mit dem Außenkörper (16) in Löserichtung bewegt werden kann.

9. Mutter nach Anspruch 8, **dadurch gekennzeichnet, dass** das äußere Ende des Sperrstiftes (40) in der Sperrstellung von der äußeren Umfangsfläche des Außenkörpers (16) vorsteht und das innere Ende des Sperrstiftes (40) und die Rastfläche (42) so ausgebildet sind, dass der Sperrstift (40) durch Eindrücken aus der Sperrstellung in die Freigabestellung gebracht werden kann.

10. Mutter nach Anspruch 8 oder 9, **dadurch gekennzeichnet, dass** der Sperrstift (40) in die Sperrstellung vorgespannt ist.

## Claims

1. A nut with
• an outer body (16), which has an axial through-hole (22), an inner body, which is accommodated in the through-hole (22) so as to be displaceable in the axial direction, has an internal thread and is divided in the axial direction into at least two jaws (18, 20), which each have an internal thread section (24) on their radially internal face and
• with first guide means (26), which are provided on the outer body (16); and
• second guide means (30), which are provided on the jaws (18, 20) and cooperate with the first guide means (26) in such a way that the jaws (18, 20), when the outer body (16) is displaced relative to the inner body in the screwing-down direction of the nut (10), are closed,
**characterised in that**
• the jaws (18, 20) are moved away from one another when the outer body (16) is displaced relative to the inner body in the unscrewing direction of the nut (10) and
• the assembled jaws (18, 20) have at least a first section (120) parallel to the longitudinal axis (A) and at least a second section (122) moving away from the longitudinal axis (A) in the screwing-down direction of the nut (10).

2. The nut (10) according to claim 1, **characterised in that** the second section (122) has a cross-section enlarged with a constant gradient at least at right angles to the parting plane of the jaws (18, 20) in the screwing-down direction of the nut (10).

3. The nut (10) according to claim 1 or 2, **characterised in that**, viewed in the screwing-down direction of the nut (10), there is disposed a first section (120), behind that a second section (122), behind that a first section (120), behind the latter in turn a second section (122) and behind that in turn a second section (120).

4. The nut (10) according to any one of claims 1 to 3, **characterised in that** the second guide means (30) cooperate with the first guide means (26) in such a way that the jaws (18, 20), when the outer body (16) is displaced relative to the inner body in the unscrewing direction, are displaced radially outwards and, when the outer body (16) is displaced relative to the inner body in the screwing-down direction, are displaced radially inwards.

5. The nut according to any one of the preceding claims, **characterised in that** the second guide means (30) comprise grooves (30), which run in the side faces of the jaws (18, 20) and move away from the axis (A) in the screwing-down direction, and that the first guide means comprise noses (26), which project from the through-hole (22) and run in the grooves (30).

6. The nut according to any one of the preceding claims, **characterised in that** an external wedge face (36), which moves away from the axis (A) in the screwing-down direction, is provided on each jaw (18, 20) and an internal wedge face (34) is provided on the through-hole (22) to each jaw (18, 20), said internal wedge face, corresponding to the assigned external wedge face (36), moving away from the axis (A) in the screwing-down direction.

7. The nut according to any one of the preceding claims, **characterised in that** the jaws (18, 20) are pretensioned radially outwards.

8. The nut according to any one of the preceding claims, **characterised in that** a locking pin (40) is guided through the outer body (16) so as to be displaceable crosswise to the axis (A) and, in its locking position, lies with its inner end adjacent to a locating face (42), which is provided on at least one jaw (18) pointing crosswise to the axis (A) in the screwing-down direction, and, in its release position, can be moved with its inner end past the locating face (42) and, together with the outer body (16), in the release direction.

9. The nut according to claim 8, **characterised in that** the outer end of the locking pin (40) projects in the locking position from the outer peripheral face of the outer body (16) and the inner end of the locking pin (40) and the locating face (42) are designed in such a way that the locking pin (40) can be brought out of the locking position into the release position by pressing in.

10. The nut according to claim 8 or 9, **characterised in that** the locking pin (40) is pretensioned into the locking position.

## Revendications

1. Ecrou avec
- un corps extérieur (16) qui présente une ouverture de passage axiale (22), un corps intérieur logé de manière mobile en direction axiale dans l'ouverture de passage (22), qui présente un filetage intérieur et qui est divisé, dans la direction axiale, en au moins deux mâchoires (18, 20), chacune portant, sur sa surface radiale intérieure, un segment de filetage intérieur (24) et
- avec des premiers moyens de guidage (26) prévus sur le corps extérieur (16) ; et
- des seconds moyens de guidage (30), prévus sur les mâchoires (18, 20) et coopérant avec les premiers moyens de guidage (26) de telle sorte que les mâchoires (18, 20) se ferment lorsque le corps extérieur (16) est déplacé par rapport au corps intérieur dans la direction de serrage de l'écrou (10),
**caractérisé en ce que**
- lors du déplacement du corps extérieur (16) par rapport au corps intérieur dans la direction de desserrage de l'écrou (10), les mâchoires (18, 20) sont éloignées les unes des autres et
- les mâchoires (18, 20) assemblées présentent au moins une première section (120) parallèle à l'axe longitudinal (A) et au moins une seconde section (122) s'éloignant de l'axe longitudinal (A) dans la direction de serrage de l'écrou (10).

2. Ecrou (10) selon la revendication 1, **caractérisé en ce que** la seconde section (122) présente, au moins perpendiculairement au plan de joint des mâchoires (18, 20), dans la direction de serrage de l'écrou (10), une section s'élargissant selon une pente constante.

3. Ecrou (10) selon la revendication 1 ou 2, **caractérisé en ce que**, vu dans la direction de serrage de l'écrou (10), sont disposées une première section (120), suivie d'une seconde section (122), suivie d'une première section (120), suivie à nouveau d'une seconde section (122) et suivie à nouveau d'une première section (120).

4. Ecrou (10) selon l'une des revendications 1 à 3, **caractérisé en ce que** les seconds moyens de guidage (30) coopèrent avec les premiers moyens de guidage (26) de telle sorte que, lorsque le corps extérieur (16) est déplacé par rapport au corps intérieur dans la direction du desserrage, les mâchoires (18, 20) sont déplacées radialement vers l'extérieur, et que, lorsque le corps extérieur (16) est déplacé par rapport au corps intérieur dans la direction du serrage, les mâchoires (18, 20) sont déplacées radialement vers l'intérieur.

5. Ecrou selon l'une des revendications précédentes, **caractérisé en ce que** les seconds moyens de guidage comprennent des rainures (30) qui débouchent dans les faces latérales des mâchoires (18, 20) et qui s'éloignent de l'axe A dans la direction du serrage, et **en ce que** les premiers moyens de guidage comprennent des ergots (26) qui dépassent de l'ouverture de passage (22) et qui coulissent dans les rainures (30).

6. Ecrou selon l'une des revendications précédentes, **caractérisé en ce que** sont prévus, sur chaque mâchoire (18, 20), une surface externe (36) en forme de coin, qui s'éloigne de l'axe (A) dans la direction du serrage, et, sur l'ouverture de passage (22), une surface en forme de coin (34) pour chaque mâchoire (18, 20), qui s'éloigne de l'axe (A) dans la direction du serrage, en correspondance avec la surface en coin extérieure (36) qui lui est affectée.

7. Ecrou selon l'une des revendications précédentes, **caractérisé en ce que** les mâchoires (18, 20) sont précontraintes radialement vers l'extérieur.

8. Ecrou selon l'une des revendications précédentes, **caractérisé en ce qu'**une broche de blocage (40) est guidée de manière mobile à travers le corps extérieur (16), perpendiculairement à l'axe (A), cette broche étant, dans sa position de blocage, en appui par son extrémité intérieure sur une surface d'arrêt (42) prévue sur au moins une mâchoire (18) et orientée perpendiculairement à l'axe (A) dans la direction du serrage, et, dans sa position de déblocage, son extrémité intérieure pouvant passer au-dessus de cette surface d'arrêt (42) et la broche pouvant être déplacée avec le corps extérieur (16) dans la direction du desserrage.

9. Ecrou (10) selon la revendication 8, **caractérisé en ce que** l'extrémité extérieure de la broche de blocage (40), dans la position de blocage, dépasse de la surface périphérique du corps extérieur (16) et **en ce que** l'extrémité intérieure de la broche de blocage (40) et la surface d'arrêt (42) sont configurées de telle sorte que la broche de blocage (40) peut être amenée de sa position de blocage dans sa position de déblocage en l'enfonçant.

10. Ecrou (10) selon la revendication 8 ou 9, **caractérisé en ce** la broche de blocage (40) est précontrainte en position de blocage.
